# EUROPEAN PATENT APPLICATION

(11) **EP 4 524 421 A1**
(43) Date of publication of application: **19.03.2025**
(21) Application number: 23803206.4
(22) Date of filing: 16.02.2023
(51) Int. Cl.: F16F 7/104, F16F 13/10, F16F 15/08

(54) **VIBRATION CONTROL DEVICE AND METHOD FOR MANUFACTURING VIBRATION CONTROL DEVICE**

(30) Priority: 11.05.2022 JP 2022078460
(71) Applicant: Prospira Corporation, Kanagawa prefecture 212-0013 (JP)
(72) Inventor: TAKAKURA Tomoki, Kawasaki city, Kanagawa 212-0013 (JP)
(74) Representative: Scott, Stephen John
(86) International application number: PCT/JP2023/005498
(87) International publication number: WO 2023/218716

(57) **Abstract**

An anti-vibration device of the present disclosure is an anti-vibration device including a cylindrical outer attachment member (1), an inner attachment member (2) disposed closer to one side of the outer attachment member (1) in an axial direction, and a body rubber (3) connecting the outer attachment member (1) and the inner attachment member (2), the body rubber (3) having an outer surface (3fo) formed in a shape of a truncated cone convex toward the inner attachment member (2). The body rubber (3) includes a rubber body portion (31) and a rubber mass portion (32). The rubber body portion (31) is in contact with the outer attachment member (1) and the inner attachment member (2), the rubber mass portion (32) is not in contact with either the outer attachment member (1) or the inner attachment member (2) and protrudes from the rubber body portion (31), and the rubber body portion (31) and the rubber mass portion (32) are integrally formed from the same rubber.

## Description

### TECHNICAL FIELD

The present disclosure relates to an anti-vibration device and a method for manufacturing an anti-vibration device. The present application claims priority to Japanese Patent Application No. 2022-078460 filed on May 11, 2022, the entire contents of which are incorporated herein by reference.

### BACKGROUND

A conventionally known anti-vibration device used, for example, as an engine mount, includes a cylindrical outer attachment member, an inner attachment member disposed closer to one side of the outer attachment member in the axial direction, and a body rubber connecting the outer attachment member and the inner attachment member. The body rubber has an outer surface formed in the shape of a truncated cone convex toward the inner attachment member.

On the other hand, as electric vehicles have become more common in recent years, anti-vibration devices such as the one described above have been required to have a reduced dynamic spring constant in the high-frequency vibration range of several 100 Hz to 1000 Hz. The increase in the dynamic spring constant in this high-frequency vibration range due to surging of the body rubber (a phenomenon in which the body rubber itself undergoes self-excited vibration and the amplitude increases rapidly upon application of an external force with a frequency component near the natural frequency of the body rubber itself) is a problem.

To solve this problem, it has been proposed to fix a ring member made of a specific rubber elastic material as a mass to the body rubber (see, for example, Patent Literature (PTL) 1), or to form a dynamic damper by elastically connecting a mass member separately to the outer attachment member (see, for example, PTL 2).

### CITATION LIST

### Patent Literature

PTL 1: JP H10-267069 A
PTL 2: JP 2019-113177 A

### SUMMARY

### (Technical Problem)

However, in all of the conventional technologies described in the aforementioned Patent Literature, another member is attached to a regular anti-vibration device, which makes the configuration complicated and leads to issues such as increased manufacturing costs.

It is an aim of the present disclosure to provide an anti-vibration device that can suppress the increase in the dynamic spring constant due to surging of the body rubber with a simple configuration, and a method for manufacturing an anti-vibration device that can easily obtain such an anti-vibration device.

### (Solution to Problem)

An anti-vibration device according to the present disclosure is an anti-vibration device including a cylindrical outer attachment member, an inner attachment member disposed closer to one side of the outer attachment member in an axial direction, and a body rubber connecting the outer attachment member and the inner attachment member, the body rubber having an outer surface formed in a shape of a truncated cone convex toward the inner attachment member, wherein
the body rubber includes a rubber body portion and a rubber mass portion,
the rubber body portion is in contact with the outer attachment member and the inner attachment member,
the rubber mass portion is not in contact with either the outer attachment member or the inner attachment member and protrudes from the rubber body portion, and
the rubber body portion and the rubber mass portion are integrally formed from a same rubber.

The anti-vibration device according to the present disclosure can, with a simple configuration, suppress an increase in the dynamic spring constant due to surging of the body rubber.

In the anti-vibration device of the present disclosure, the rubber mass portion may protrude from the rubber body portion toward the one side in the axial direction.

In this case, the manufacturing of the anti-vibration device becomes more efficient.

In the anti-vibration device of the present disclosure, the rubber mass portion may protrude from the rubber body portion toward the other side relative to the one side in the axial direction.

In this case, the rubber mass portion is less likely to suffer damage or the like due to contact with external foreign matter.

A method for manufacturing an anti-vibration device according to the present disclosure is a method for manufacturing an anti-vibration device to obtain any of the above-described anti-vibration devices, the method including:
preparing a pre-anti-vibration device with a same configuration as the anti-vibration device except for the body rubber not including the rubber mass portion; and
forming the rubber mass portion of the body rubber by removing a rubber portion near both ends on the one side and/or the other side relative to the one side in the axial direction at both contact portions of the body rubber in contact with the outer attachment member and the inner attachment member.
With the method for manufacturing an anti-vibration device according to the present disclosure, the above-described anti-vibration device can easily be obtained.

### (Advantageous Effect)

According to the present disclosure, an anti-vibration device that can suppress the increase in the dynamic spring constant due to surging of the body rubber with a simple configuration, and a method for manufacturing an anti-vibration device that can easily obtain such an anti-vibration device, can be provided.

### BRIEF DESCRIPTION OF THE DRAWINGS

In the accompanying drawings:
FIG. 1 is a vertical cross-sectional view in the axial direction illustrating an anti-vibration device according to a first embodiment of the present disclosure by a cross-section along the X-X line in FIG. 2;
FIG. 2 is a top view of the anti-vibration device in FIG. 1;
FIG. 3 is a perspective view illustrating the appearance of the anti-vibration device in FIG. 1;
FIG. 4 is a vertical cross-sectional view similar to FIG. 1, illustrating an anti-vibration device according to a second embodiment of the present disclosure;
FIG. 5 is a vertical cross-sectional view similar to FIG. 1, illustrating an anti-vibration device according to a third embodiment of the present disclosure;
FIG. 6 is a vertical cross-sectional view similar to FIG. 1, illustrating an anti-vibration device according to a fourth embodiment of the present disclosure;
FIG. 7 is a vertical cross-sectional view similar to FIG. 1, illustrating an example of a pre-anti-vibration device; and
FIG. 8 is a graph illustrating the relationship between frequency and dynamic spring constant, illustrating the effects of the present disclosure.

### DETAILED DESCRIPTION

The anti-vibration device and method for manufacturing an anti-vibration device can be suitably used as any type of anti-vibration device and method for manufacturing the anti-vibration device, such as an engine mount of a vehicle and a method for manufacturing the engine mount.

Embodiments of an anti-vibration device and a method for manufacturing an anti-vibration device according to the present disclosure are described below with reference to the drawings.

Members and components that are common across drawings are labeled with the same reference signs.

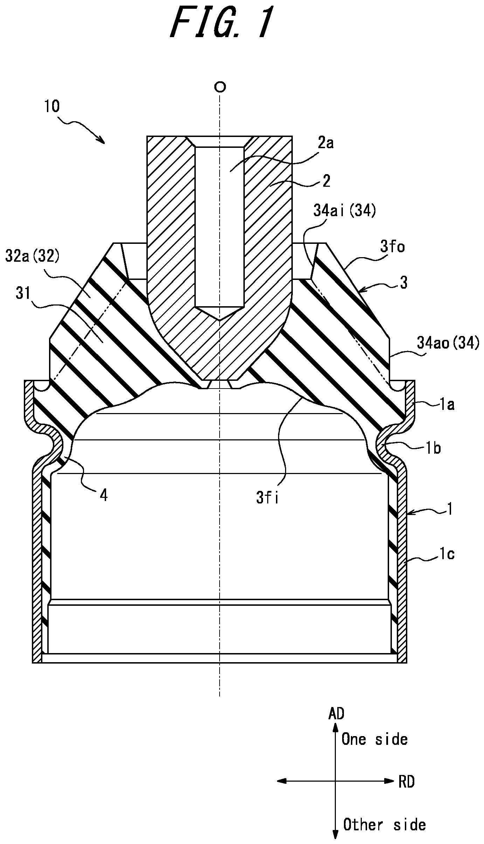

In the present description, the "axial direction" refers to the direction parallel to the central axis O of the cylindrical outer attachment member (hereinafter simply referred to as the "central axis O") and is indicated by the reference sign "AD" in some of the drawings. The "circumferential direction" refers to the direction circumferential to the central axis O. The "radial direction" refers to the direction orthogonal to the central axis and is indicated by the reference sign "RD" in some of the drawings. In the present description, the "radial inner side" refers to the side closer to the central axis O in the radial direction, and the "radial outer side" refers to the side farther from the central axis O in the radial direction. Furthermore, in the present description, "one side in the axial direction" refers to the side where the inner attachment member is located in the positional relationship between the outer attachment member and the inner attachment member in the axial direction (the upper side of the drawing in FIG. 1 and FIGS. 4 to 7), and "the other side in the axial direction" refers to the side where the outer attachment member is located in the positional relationship between the outer attachment member and the inner attachment member in the axial direction (the lower side of the drawing in FIG. 1 and FIGS. 4 to 7). These sides are respectively indicated as "one side" and "other side" in some of the drawings.

The anti-vibration devices 10, 20, 30, 40 of the embodiments described below are configured as an engine mount but may be configured as any type of anti-vibration device.

In the following explanation, the configuration, shape, and the like of the anti-vibration device are described for a stand-alone device under no load, with no load input or the like from an engine, for example.

### <Anti-Vibration Device>

### (First Embodiment)

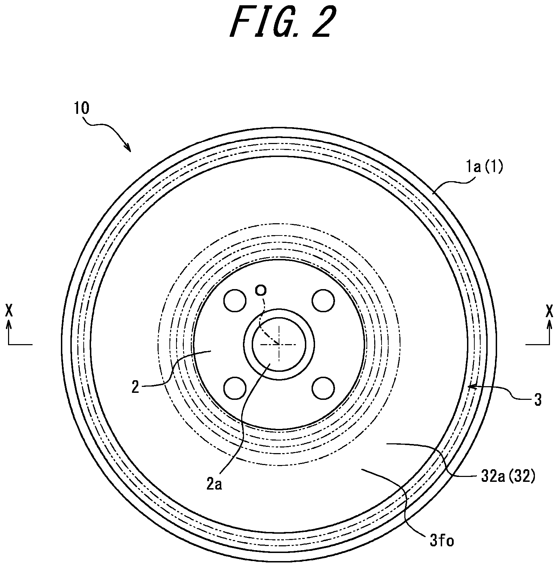

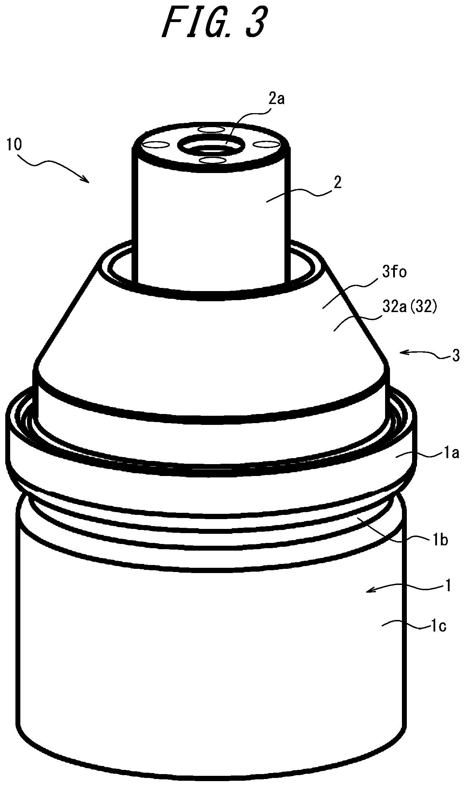

FIGS. 1 to 3 are diagrams illustrating an anti-vibration device 10 according to a first embodiment of the present disclosure. FIG. 1 is a vertical cross-sectional view in the axial direction illustrating a cross-section, along the X-X line in FIG. 2, of the anti-vibration device according to the first embodiment of the present disclosure. FIG. 2 is a top view of the anti-vibration device in FIG. 1. FIG. 3 is a perspective view illustrating the appearance of the anti-vibration device in FIG. 1.

The anti-vibration device 10 according to the first embodiment of the present disclosure is configured as an engine mount that supports the engine of a vehicle. The anti-vibration device 10 of the present embodiment is arranged and put into use so that the main vibration (for example, vibration of the vehicle's engine) is input in the axial direction (in the example in FIG. 1, the vertical direction in the drawing). In other words, the anti-vibration device 10 is arranged so that the direction of the main vibration input to the anti-vibration device 10 coincides with the axial direction.

As illustrated in FIGS. 1 to 3, the anti-vibration device 10 of the present embodiment includes an outer attachment member 1, an inner attachment member 2, and a body rubber 3.

The outer attachment member 1 has a cylindrical shape. Here, "cylindrical" may refer not only to a bottomless cylindrical shape but also a bottomed cylindrical shape, i.e., the edge on the opposite side from the inner attachment member 2 in the axial direction (i.e., the other side in the axial direction) may be closed. By virtue of being cylindrical, the outer attachment member 1 has a virtual central axis O.

In the present embodiment, as illustrated in FIG. 1, the outer attachment member 1 includes a portion 1a on one side in the axial direction, which is closer to the inner attachment member 2 in the axial direction, a reduced diameter portion 1b, and a portion 1c on the other side in the axial direction, which is farther from the inner attachment member 2 in the axial direction. The body rubber 3 is mainly connected to the portion 1a on one side in the axial direction of the outer attachment member 1.

The outer attachment member 1 is made of metal, resin, or another rigid material and is attached to one of a vibration generating portion and a vibration receiving portion (for example, the body of a vehicle), with or without a non-illustrated bracket or the like in between, for example.

The inner attachment member 2 is a member located on the inner side (inside) of the cylindrical outer attachment member 1 in the radial direction.

As illustrated in FIG. 1, the inner attachment member 2 is disposed closer to one side of the outer attachment member 1 in the axial direction (in the example in FIG. 1, on the upper side in the drawing). That is, the inner attachment member 2 is arranged to be offset from at least the axial center of the outer attachment member 1 toward one side in the axial direction (in the example in FIG. 1, toward the upper side in the drawing).

In the present embodiment, the inner attachment member 2 has a virtual central axis, like the outer attachment member 1. In the present embodiment, the central axis of the inner attachment member 2 is the same as the central axis O of the outer attachment member 1. That is, in the present embodiment, the outer attachment member 1 and the inner attachment member 2 are concentrically arranged.

The inner attachment member 2 is made of metal, resin, or other rigid material and is used by being attached to the other one of the vibration generating portion and the vibration receiving portion (for example, the engine of a vehicle) via a female thread 2a, for example, formed on the upper end face (end face on one side in the axial direction) as illustrated in the example in FIG. 1.

The body rubber 3 connects the outer attachment member 1 and the inner attachment member 2. As illustrated in FIG. 1, in the present embodiment, the body rubber 3 more specifically connects the outer attachment member 1 and the inner attachment member 2 by the below-described rubber body portion 31 of the body rubber 3 being fixed to and therefore contacting the outer attachment member 1 and the inner attachment member 2. The body rubber 3 (more specifically, the rubber body portion 31 of the body rubber 3) is fixed to the outer attachment member 1 and the inner attachment member 2 by vulcanization and/or adhesive bonding or the like. In the present embodiment, the body rubber 3 is more specifically adhered to the inner circumferential surface (surface on the radial inner side) of a portion of the portion 1a on one side in the axial direction of the outer attachment member 1 and the reduced diameter portion 1b. The body rubber 3 is fixed to the outer circumferential surface (surface on the outer side in the radial direction) of the portion of the inner attachment member 2 closer to the other side in the axial direction.

Referring to FIG. 1, in the present embodiment, the body rubber 3 is divided into left and right portions in the drawing, having, as a border, a portion on the other side in the axial direction of the axial other side edge of the inner attachment member 2 including the central axis line O. The body rubber 3 is therefore an annular body with a through hole. However, the body rubber 3 may be a continuous bottomed cup-shaped body, without being divided into left and right portions in the drawing, at the other side in the axial direction of the axial other side edge of the inner attachment member 2.

The body rubber 3 absorbs and/or damps the input vibration in the axial direction of the anti-vibration device 10 by undergoing compression and shearing deformation.

As illustrated in FIG. 1, the outer surface 3fo of the body rubber 3 is formed in the shape of a truncated cone convex toward the inner attachment member 2. In other words, the outer surface 3fo of the body rubber 3 is formed overall so that the diameter decreases with increased proximity to the inner attachment member 2.

In the present embodiment, as illustrated in FIG. 2, the outer attachment member 1 and the body rubber 3 extend continuously over the entire circumferential direction.

Also, in the present embodiment, as illustrated in FIG. 1, the body rubber 3 is formed in a shape that is lineally symmetrical in a vertical cross-sectional view, with the central axis O as the target axis. Furthermore, in the present embodiment, the body rubber 3 is formed to have a uniform shape (vertical cross-sectional shape) over the entire circumferential direction. In other words, in the present embodiment, the body rubber 3 has the same vertical cross-sectional shape illustrated in FIG. 1 at any position in the circumferential direction. In the present description, the "uniform shape" includes the meaning of "uniform size", and ""same shape" includes the meaning of "same size".

In the present embodiment, as illustrated in FIG. 1, the outer attachment member 1 is also formed in a shape that is lineally symmetrical in a vertical cross-sectional view, with the central axis O as the target axis, like the body rubber 3. Furthermore, in the present embodiment, the outer attachment member 1 is also formed to have a uniform shape (vertical cross-sectional shape) over the entire circumferential direction, like the body rubber 3. In other words, in the present embodiment, the outer attachment member 1 has the same vertical cross-sectional shape illustrated in FIG. 1 at any position in the circumferential direction.

Accordingly, in the present embodiment, the anti-vibration device 10 is formed to have a substantially uniform shape (vertical cross-sectional shape) over the entire circumferential direction. The anti-vibration device 10 may have at least some members formed non-uniformly in the circumferential direction. From the viewpoint of obtaining anti-vibration characteristics that are as uniform as possible at any position in the circumferential direction, however, the anti-vibration device 10 is preferably formed to have a substantially uniform shape (vertical cross-sectional shape) over the entire circumferential direction.

As illustrated in FIG. 1, in the present embodiment, the anti-vibration device 10 has a coating rubber 4 that covers the inner circumferential surface (surface on the radial inner side) of the reduced diameter portion 1b and the portion 1c on the other side in the axial direction of the outer attachment member 1. The "body rubber 3" in the present description refers only to the portion that substantially contributes to the absorption and/or damping of the input vibration in the axial direction of the anti-vibration device 10 by its own compression and shearing deformation, as described above. The coating rubber 4 is therefore not included in the body rubber 3. In the present embodiment, the coating rubber 4 is continuously and integrally formed with the body rubber 3, but the coating rubber 4 may be formed as a separate body from the body rubber 3, or the coating rubber 4 may be omitted from the anti-vibration device 10.

In the example illustrated in FIG. 1, the axial length of the portion 1c on the other side in the axial direction of the outer attachment member 1 and the coating rubber 4 covering the inner circumferential surface thereof is longer than the combined axial direction length of the portion 1a on one side in the axial direction of the outer attachment member 1 and the reduced diameter portion 1b, for example. The axial length of the portion 1c and the coating rubber 4 may, however, be shorter than the length illustrated in FIG. 1 and is not particularly limited.

In the present embodiment, as illustrated in FIG. 1, the body rubber 3 has a rubber body portion 31 and a rubber mass portion 32. Here, the rubber mass portion 32 can function like a dynamic damper having a spring element and a mass element, as described below.

As illustrated in FIG. 1, the rubber body portion 31 is in contact with the outer attachment member 1 and the inner attachment member 2. More specifically, in the present embodiment, as described above, the rubber body portion 31 is fixed to, and therefore in contact with, the inner circumferential surface (surface on the radial inner side) of a portion of the portion 1a on one side in the axial direction of the outer attachment member 1 and the reduced diameter portion 1b by vulcanization and/or adhesive bonding or the like. In greater detail, in the present embodiment, the rubber body portion 31 is adhered to, and therefore in contact with, nearly the entire inner circumferential surface in the axial direction of the portion 1a on one side in the axial direction of the outer attachment member 1.

The rubber body portion 31 is fixed to, and therefore in contact with, the outer circumferential surface (surface on the outer side in the radial direction) of the portion of the inner attachment member 2 closer to the other side in the axial direction by vulcanization and/or adhesive bonding or the like.

On the other hand, as illustrated in FIG. 1, the rubber mass portion 32 is not in contact with either the outer attachment member 1 or the inner attachment member 2 and protrudes from the above-described rubber body portion 31. In FIG. 1, for ease of understanding, a virtual schematic boundary surface (a boundary line in FIG. 1, which is a vertical cross-sectional view) between the rubber body portion 31 and the rubber mass portion 32a (32) is indicated by a dash-double dot line.

More specifically, in the present embodiment, as illustrated in FIG. 1, the rubber mass portion 32a (32) is separated from, and therefore not in contact with either of, the outer attachment member 1 and the inner attachment member 2 by two recesses 34 provided at ends of the body rubber 3 on one side in the axial direction (more specifically, two recesses 34ao and 34ai respectively provided in the body rubber 3 between the outer attachment member 1 and the inner attachment member 2 at ends of the body rubber 3 on one side in the axial direction).

In the present embodiment, as illustrated in FIG. 1, the rubber mass portion 32a (32) protrudes from the rubber body portion 31 toward one side in the axial direction. More precisely, in the present embodiment, the rubber mass portion 32a (32) protrudes and extends in the axial and radial directions from the end of the rubber body portion 31 on the one side in the axial direction toward the one side in the axial direction and outward in the radial direction.

The shape (vertical cross-sectional shape) of the rubber mass portion 32a (32) is not particularly limited. For example, in the example illustrated in FIG. 1, the rubber mass portion 32a (32) substantially has the shape of a parallelogram in a vertical cross-sectional view, with the length of the boundary line indicated by the dash-double dot line in the drawing being greater than the length in the direction orthogonal to the boundary line and the length in the axial direction at each position in the radial direction. However, the rubber mass portion 32a (32) may, for example, be shaped so that the length of the boundary line indicated by the dash-double dot line in the drawing is less than the length in the direction orthogonal to the boundary line or the length in the axial direction at each position in the radial direction.

In the present embodiment, as illustrated in FIG. 1, the rubber mass portion 32 is not formed at the end of the body rubber 3 on the other side in the axial direction, that is, on the inner surface 3fi side of the body rubber 3.

Furthermore, as illustrated in FIG. 1, the rubber body portion 31 and the rubber mass portion 32 are integrally formed from the same rubber. That is, in the present embodiment, the rubber body portion 31 and the rubber mass portion 32 of the body rubber 3 are continuously and integrally formed from the same type of rubber with the same composition and the like.

Here, the rubber of the rubber mass portion 32 could be formed from a different rubber than that of the rubber body portion 31, for example, from a rubber with a higher density than that of the rubber body portion 31 (i.e., the other rubber could be integrally molded into the rubber body portion 31, integrated with the rubber body portion 31 by uneven fitting with the rubber body portion 31, or the like). However, as a result of the intense study, I arrived at the present disclosure by discovering that even when formed from the same rubber, the rubber body portion 31 and the rubber mass portion 32 can sufficiently achieve the function of a dynamic damper and sufficiently suppress the increase in the dynamic spring constant in the high-frequency vibration range, for example, due to surging of the body rubber 3.

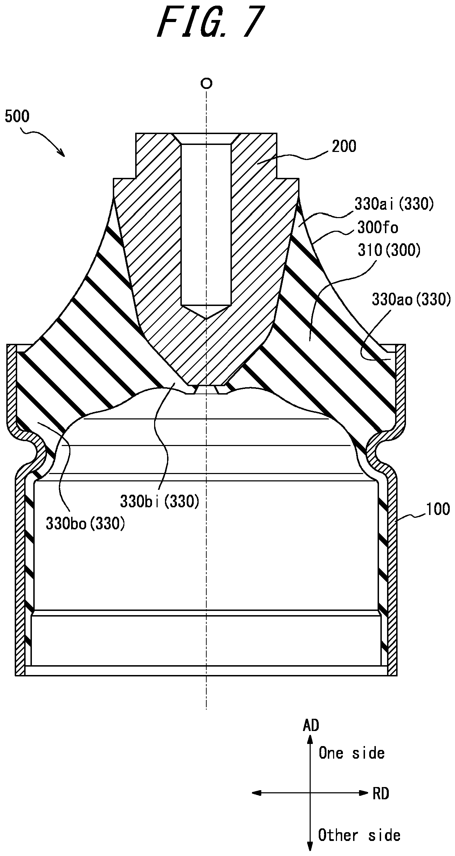

The anti-vibration device 10 having the body rubber 3 as described above can be manufactured by, for example, vulcanization molding and bonding an unvulcanized body rubber 3 to the outer attachment member 1 and the inner attachment member 2 in a vulcanizing mold by a known method into the shape, illustrated in FIG. 1, having the rubber body portion 31 and the rubber mass portion 32. The anti-vibration device 10 can also be manufactured by fixing, through vulcanization and/or adhesive bonding, a semi-vulcanized or vulcanized body rubber 3 having the rubber body portion 31 and the rubber mass portion 32, molded by a known method in the shape illustrated in FIG. 1, to the outer attachment member 1 and the inner attachment member 2. Furthermore, the anti-vibration device 10 can be manufactured by removing a rubber portion near predetermined ends from a pre-anti-vibration device 500 that does not have the rubber mass portion to form the recesses 34 (34ao, 34ai), as described below with reference to FIG. 7 and the like.

Next, the main effects of the above-described embodiment are described below.

First, in the present embodiment, the body rubber 3 has the rubber body portion 31 and the rubber mass portion 32 (32a). The rubber body portion 31 is in contact with the outer attachment member 1 and the inner attachment member 2, and the rubber mass portion 32 (32a) is not in contact with either the outer attachment member 1 or the inner attachment member 2 and protrudes from the rubber body portion 31. That is, according to the present embodiment, the rubber mass portion 32 protrudes from the rubber body portion 31 without contacting the outer attachment member 1 and the inner attachment member 2 and thus can be displaced independently of the outer attachment member 1 and the inner attachment member 2. The rubber mass portion 32 can therefore function like a dynamic damper having a spring element and a mass element, which in turn can suppress the increase in the dynamic spring constant in the anti-vibration device 10 in the high-frequency vibration range, for example, based on the surging phenomenon of the body rubber 3.

In the present embodiment, the rubber body portion 31 and the rubber mass portion 32 are integrally formed from the same rubber. Therefore, the anti-vibration device 10 has a simplified configuration as compared to the case in which the rubber body portion 31 and the rubber mass portion 32 are formed from different rubbers, for example, or the case in which a dynamic damper is formed by elastically connecting a mass member such as metal separately to the anti-vibration device 10. This configuration therefore facilitates manufacturing and enables manufacturing at lower cost.

That is, the anti-vibration device 10 according to the present embodiment can, with a simple configuration, suppress an increase in the dynamic spring constant due to surging of the body rubber.

In the present embodiment, the rubber mass portion 32a (32) protrudes from the rubber body portion 31 toward one side in the axial direction (i.e., the side where the inner attachment member 2 is located in the axial direction). In this case, for example, the manufacturing of the anti-vibration device 10 with the rubber mass portion 32 is more efficient than when the rubber mass portion 32 protrudes from the rubber body portion 31 toward the other side in the axial direction (i.e., the side with the outer attachment member 1 in the axial direction), because the outer attachment member 1 is less likely to obstruct operation.

In the present embodiment, the mass of the rubber mass portion 32 is preferably 10% to 60% of the mass of the rubber body portion 31. By the mass of the rubber mass portion 32 being 10% or more of the mass of the rubber body portion 31, the effect of suppressing the increase in the dynamic spring constant can be sufficiently obtained, and by being 60% or less, an excessive increase in the overall mass of the anti-vibration device 10, which leads to a decrease in fuel efficiency of the vehicle in the case of use as an engine mount, for example, can be suppressed. From the same perspective, the mass of the rubber mass portion 32 is more preferably 20% to 50% of the mass of the rubber body portion 31. In the example illustrated in FIG. 1, the mass of the rubber mass portion 32 is approximately 25% of the mass of the rubber body portion 31.

Adjustment of the mass of the rubber mass portion 32 enables control of the frequency and degree to which the increase in the dynamic spring constant can be suppressed.

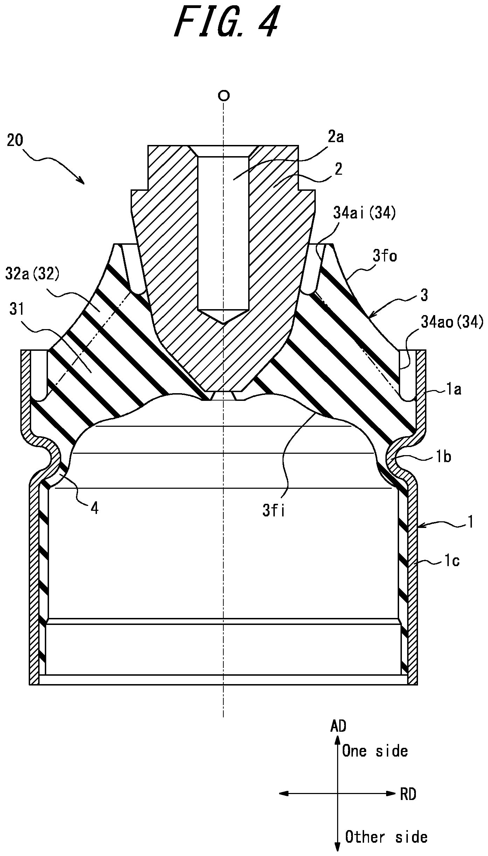

Next, anti-vibration devices 20 to 40 according to second through fourth embodiments of the present disclosure will be described with reference to FIGS. 4 to 6. In the second through fourth embodiments, members, parts, and the like that are similar to those of the first embodiment are labeled with the same symbols, and a description thereof will be omitted.

### (Second Embodiment)

FIG. 4 is a vertical cross-sectional view similar to FIG. 1, illustrating an anti-vibration device according to a second embodiment of the present disclosure.

The anti-vibration device 20 according to the second embodiment of the present disclosure differs substantially from the anti-vibration device 10 according to the first embodiment of the present disclosure only in the configuration of the outer attachment member 1 (more specifically, the axial length of the portion 1a on one side in the axial direction of the outer attachment member 1), and in other respects is substantially the same as the anti-vibration device 10 of the first embodiment. The following description focuses mainly on the differences from the first embodiment.

Referring to FIG. 4, in the present embodiment, the axial length of the portion 1a on one side in the axial direction of the outer attachment member 1 is greater than the axial length of the portion 1a on one side in the axial direction of the outer attachment member 1 in the anti-vibration device 10 of the first embodiment (see FIG. 1). In other words, unlike the first embodiment, in the present embodiment, the body rubber 3 (more specifically, the rubber body portion 31 of the body rubber 3) only contacts and is fixed to an area, on one side in the axial direction, across approximately half the axial length of the portion 1a on one side in the axial direction of the outer attachment member 1, rather than the entire axial length of the portion 1a. The body rubber 3 neither contacts nor is fixed to the remaining area at the other side in the axial direction of the portion 1a on one side in the axial direction.

According to the anti-vibration device 20 of the present embodiment with the above-described configuration, for example, when the anti-vibration device 20 is manufactured by removing rubber near predetermined ends from a pre-anti-vibration device 500 that does not have the rubber mass portion to form the recesses 34 (34ao, 34ai), as described below with reference to FIG. 7 and the like, the aforementioned remaining area at the other side in the axial direction of the portion 1a on one side in the axial direction of the outer attachment member 1 can be used as a support during the rubber removal operation, thereby facilitating the operation.

The remaining configuration and effects of the anti-vibration device 20 of the present embodiment are the same as those of the anti-vibration device 10 of the first embodiment described above.

### (Third Embodiment)

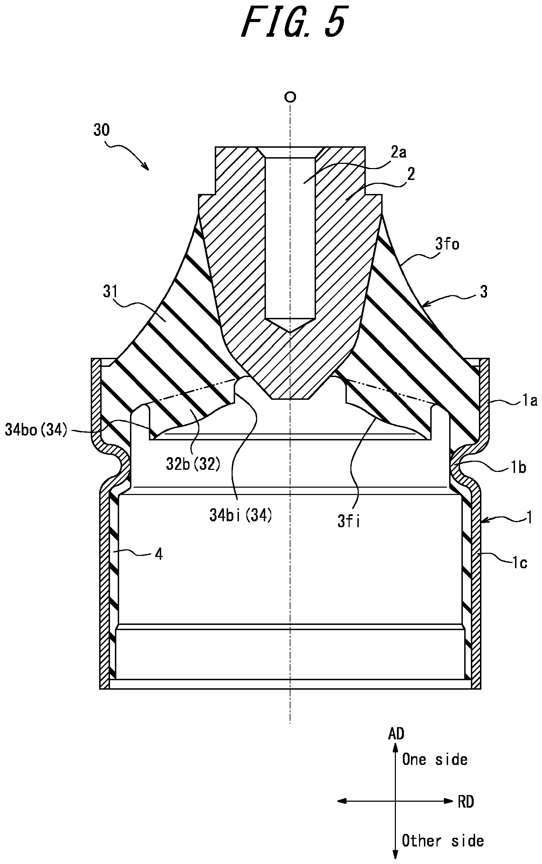

FIG. 5 is a vertical cross-sectional view similar to FIG. 1, illustrating an anti-vibration device according to the third embodiment of the present disclosure.

The anti-vibration device 30 according to the third embodiment of the present disclosure differs substantially from the anti-vibration device 20 according to the second embodiment of the present disclosure only in the configuration of the body rubber 3 (more specifically, the rubber mass portion 32 of the body rubber 3) and is otherwise substantially the same as the anti-vibration device 20 of the second embodiment. The following description focuses mainly on the differences from the second embodiment.

Referring to FIG. 5, in the present embodiment, as in the second embodiment, the body rubber 3 has a rubber body portion 31 and a rubber mass portion 32, the rubber body portion 31 is in contact with the outer attachment member 1 and the inner attachment member 2, and the rubber mass portion 32 is not in contact with either the outer attachment member 1 or the inner attachment member 2. Unlike the second embodiment, however, the rubber mass portion 32 (32b) protrudes from the rubber body portion 31 toward the other side relative to one side in the axial direction. More specifically, in the present embodiment, the rubber mass portion 32b (32) is separated from, and therefore not in contact with either of, the outer attachment member 1 and the inner attachment member 2 by two recesses 34 provided at ends of the body rubber 3 on the other side in the axial direction (more specifically, two recesses 34bo and 34bi respectively provided in the body rubber 3 between the outer attachment member 1 and the inner attachment member 2 at ends of the body rubber 3 on one side in the axial direction). As a result, the rubber mass portion 32b (32) protrudes from the rubber body portion 31 toward the other side in the axial direction. The function of the rubber mass portion 32b is similar to that of the rubber mass portion 32a of the second embodiment (and, by extension, the first embodiment), and the rubber mass portion 32b can function like a dynamic damper having a spring element and a mass element.

In the present embodiment as well, the rubber body portion 31 and the rubber mass portion 32 (32b) are integrally formed from the same rubber. Furthermore, in the present embodiment, the body rubber 3 (more specifically, the rubber body portion 31 of the body rubber 3) is in contact with and fixed to an area spanning substantially the entire axial length of the portion 1a on one side in the axial direction of the outer attachment member 1.

According to the anti-vibration device 30 of the present embodiment with the above-described configuration, the rubber mass portion 32b (32) is formed at a position that is farther on one side in the axial direction than the axial other side edge of the outer attachment member 1 and is on the radial inner side of the outer attachment member 1. The rubber mass portion 32b (32) is therefore protected, so to speak, inside the outer attachment member 1, the rubber body portion 31, and the inner attachment member 2, and is less likely to suffer damage or the like due to contact with external foreign matter.

The remaining configuration and effects of the anti-vibration device 30 of the present embodiment are the same as those of the anti-vibration device 20 of the second embodiment described above.

### (Fourth Embodiment)

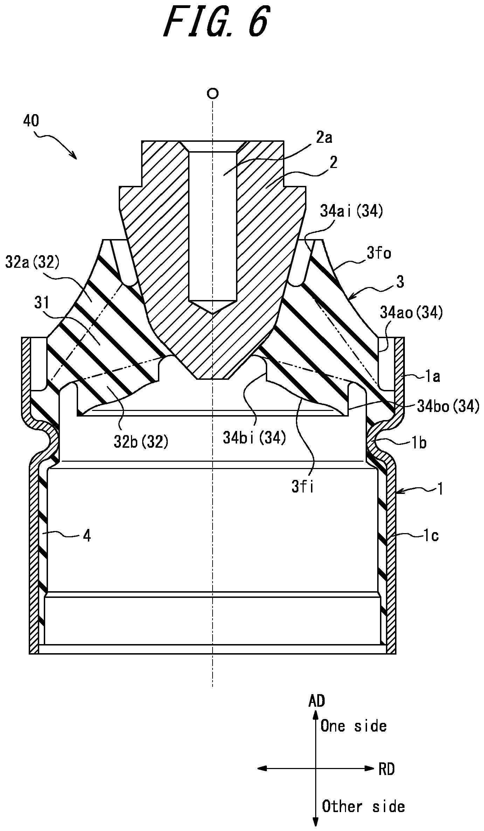

FIG. 6 is a vertical cross-sectional view similar to FIG. 1, illustrating an anti-vibration device according to a fourth embodiment of the present disclosure.

The anti-vibration device 40 according to the fourth embodiment of the present disclosure differs substantially from the anti-vibration device 20 according to the second embodiment of the present disclosure only in the configuration of the body rubber 3 (more specifically, the rubber mass portion 32 of the body rubber 3) and is otherwise substantially the same as the anti-vibration device 20 of the second embodiment. The following description focuses mainly on the differences from the second embodiment.

Referring to FIG. 6, in the present embodiment, as in the second embodiment, the body rubber 3 has a rubber body portion 31 and a rubber mass portion 32, the rubber body portion 31 is in contact with the outer attachment member 1 and the inner attachment member 2, and the rubber mass portion 32 is not in contact with either the outer attachment member 1 or the inner attachment member 2. Unlike the second embodiment, however, the rubber mass portion 32 includes, in addition to a rubber mass portion 32a that protrudes from the rubber body portion 31 toward the one side in the axial direction, a rubber mass portion 32b that protrudes from the rubber body portion 31 toward the other side in the axial direction, like the third embodiment. In the present embodiment, the configuration and function of the rubber mass portion 32a and the rubber mass portion 32b are similar respectively to those of the rubber mass portion 32a of the second embodiment (and, by extension, the first embodiment) and the rubber mass portion 32b of the third embodiment, and the rubber mass portion 32a and the rubber mass portion 32b can function like a dynamic damper having a spring element and a mass element.

In the present embodiment as well, the rubber body portion 31 and the rubber mass portion 32 (32a, 32b) are integrally formed from the same rubber.

In the present embodiment, the aforementioned "mass of the rubber mass portion 32" refers to the total mass of the rubber mass portions 32a and 32b.

According to the anti-vibration device 40 of the present embodiment with the above-described configuration, the body rubber has two rubber mass portions 32 (32a, 32b) (at two locations). An increase in the dynamic spring constant due to surging of the body rubber 3, for example in the high-frequency vibration range, can therefore be more effectively controlled.

The remaining configuration and effects of the anti-vibration device 40 of the present embodiment are the same as those of the anti-vibration device 20 of the second embodiment described above.

### <Method for Manufacturing Anti-Vibration Device>

Next, a method for manufacturing an anti-vibration device according to an embodiment of the present disclosure will be described with reference to FIG. 7 and to the above-described FIGS. 4 to 6. The method for manufacturing an anti-vibration device according to an embodiment of the present disclosure can be suitably used to obtain the anti-vibration device according to each of the above-described embodiments of the present disclosure.

FIG. 7 is a vertical cross-sectional view similar to FIG. 1, illustrating an example of a pre-anti-vibration device, described below.

The method, described below, for manufacturing an anti-vibration device according to an embodiment of the present disclosure includes a pre-anti-vibration device preparation step and a body rubber end removal step, in that order.

### (Pre-Anti-Vibration Device Preparation Step)

First, in the pre-anti-vibration device preparation step, a pre-anti-vibration device 500 is prepared to have the same configuration as, for example, the anti-vibration device according to each of the above embodiments (more specifically, the second through fourth embodiments in the case of the method for manufacturing an anti-vibration device according to the present embodiment), except that the body rubber 300 does not include a rubber mass portion.

That is, as illustrated in FIG. 7, the pre-anti-vibration device 500 to be prepared has a cylindrical outer attachment member 100, an inner attachment member 200 disposed closer to one side of the outer attachment member 100 in the axial direction, and a body rubber 300 connecting the outer attachment member 100 and the inner attachment member 200, the body rubber 300 having an outer surface 300fo formed in a shape of a truncated cone convex toward the inner attachment member 200. However, the body rubber 300 only has a rubber body portion 310 and does not have a rubber mass portion protruding from the rubber body portion 310 as in the anti-vibration devices according to the above embodiments. In the pre-anti-vibration device 500, the body rubber 300 is integrally formed from the same rubber.

The pre-anti-vibration device 500 as described above can be easily manufactured and prepared by fixing the body rubber 300 to the outer attachment member 100 and inner attachment member 200 by a known method, such as vulcanization and/or adhesive bonding or the like.

### (Body Rubber End Removal Step)

After the pre-anti-vibration device preparation step, in the body rubber end removal step, the rubber mass portion of the body rubber is formed by removing a rubber portion near both ends 330 (330ao and 330ai, and/or 330bo and 330bi) on the one side and/or the other side in the axial direction at both contact portions of the body rubber 300 in contact with the outer attachment member 100 and the inner attachment member 200 in the pre-anti-vibration device 500 prepared in the pre-anti-vibration device preparation step.

More specifically, in the body rubber end removal step, the recesses 34ao and 34ai in the above-described anti-vibration device 20 according to the second embodiment (see FIG. 4) or anti-vibration device 40 according to the fourth embodiment (see FIG. 6), for example, are formed, thereby forming the rubber mass portion 32a of the body rubber 3 between these recesses 34ao and 34ai, by removing a rubber portion near both ends 330ao and 330ai on the one side in the axial direction at both contact portions of the body rubber 300 in contact with the outer attachment member 100 and the inner attachment member 200 in the pre-anti-vibration device 500 in FIG. 7. In addition, in the body rubber end removal step, the recesses 34bo and 34bi in the above-described anti-vibration device 30 according to the third embodiment (see FIG. 5) or anti-vibration device 40 according to the fourth embodiment (see FIG. 6), for example, are formed, thereby forming the rubber mass portion 32b of the body rubber 3 between these recesses 34bo and 34bi, by removing a rubber portion near both ends 330bo and 330bi on the other side in the axial direction at both contact portions of the body rubber 300 in contact with the outer attachment member 100 and the inner attachment member 200 in the pre-anti-vibration device 500 in FIG. 7.

The method for removing the aforementioned rubber portion is not particularly limited. The rubber portion can, for example, be artificially or mechanically shaved off with a cutter or the like.

By performing the body rubber end removal step, the anti-vibration device according to each of the above embodiments, for example, can be obtained.

In addition to the pre-anti-vibration device preparation step and the body rubber end removal step, the method for manufacturing an anti-vibration device may include other steps (such as an anti-corrosion treatment step).

According to the method for manufacturing an anti-vibration device of the present embodiment with the above-described configuration, the anti-vibration device according to the present disclosure (for example, each of the above embodiments) can be obtained by simply partially removing a rubber portion from the pre-anti-vibration device 500. The anti-vibration device according to the present disclosure (for example, each of the above embodiments) can therefore easily be obtained.

### EXAMPLES

Examples of the present disclosure are described below, but the present disclosure is not limited to the Examples.

The above-described pre-anti-vibration device 500 without a rubber mass portion, illustrated in FIG. 7, was prepared as a Comparative Example. The anti-vibration device 20 according to the second embodiment of the present disclosure, having the rubber mass portion 32 as illustrated in FIG. 4, was obtained by processing an anti-vibration device equivalent to the pre-anti-vibration device 500 by the method for manufacturing an anti-vibration device according to the first embodiment of the present disclosure and was prepared as an Example. Vibration was inputted in the respective axial directions, and the dynamic spring constants of the anti-vibration devices with respect to the frequency of the input vibration were measured.

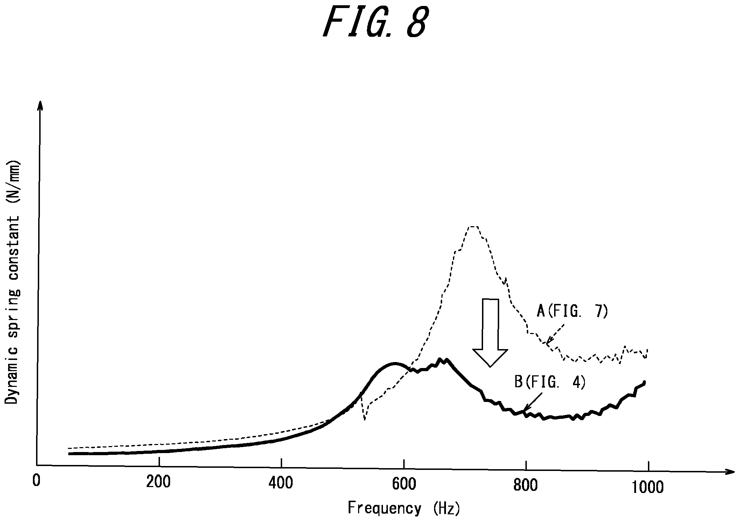

The results are illustrated by the graph in FIG. 8. In the drawing, A indicates the Comparative Example illustrated in FIG. 7, and B indicates the Example illustrated in FIG. 4.

It is clear from the results in FIG. 8 that the rubber mass portion 32 achieves the effect of a dynamic damper, reducing the surging peak (peak value of the dynamic spring constant) that was at a vibration frequency near 700 Hz.

While exemplary embodiments of the present disclosure have been described above, various changes may be made without departing from the scope of the claims.

For example, in the above embodiments, the anti-vibration devices 10 to 40 have been described as having no liquid chamber, but the anti-vibration device according to the present disclosure may have a known sealed liquid chamber, for example, inside the outer attachment member 1 (on the radial inner side), with at least part of the body rubber 3 as the chamber wall. This liquid chamber may be configured as a single liquid chamber or as two liquid chambers connected by a narrow connecting passage.

### INDUSTRIAL APPLICABILITY

The anti-vibration device and method for manufacturing an anti-vibration device can be suitably used as any type of anti-vibration device and method for manufacturing the anti-vibration device, such as an engine mount that supports the engine of a vehicle and a method for manufacturing the engine mount.

### REFERENCE SIGNS LIST

10, 20, 30, 40, 500 Anti-vibration device
1, 100 Outer attachment member
1a Portion on one side in axial direction
1b Reduced diameter portion
1c Portion on other side in axial direction
2, 200 Inner attachment member
2a Female thread
3, 300 Body rubber
3fi Inner surface
3fo, 300fo Outer surface
31, 310 Rubber body portion
32, 32a, 32b Rubber mass portion
330, 330ai, 330ao, 330bi, 330bo End
34, 34ai, 34ao, 34bi, 34bo Recessed portion
4 Coating rubber
AD Axial direction
O Central axis
RD Radial direction

## Claims

1. An anti-vibration device comprising a cylindrical outer attachment member, an inner attachment member disposed closer to one side of the outer attachment member in an axial direction, and a body rubber connecting the outer attachment member and the inner attachment member, the body rubber having an outer surface formed in a shape of a truncated cone convex toward the inner attachment member, wherein
the body rubber includes a rubber body portion and a rubber mass portion,
the rubber body portion is in contact with the outer attachment member and the inner attachment member,
the rubber mass portion is not in contact with either the outer attachment member or the inner attachment member and protrudes from the rubber body portion, and
the rubber body portion and the rubber mass portion are integrally formed from a same rubber.

2. The anti-vibration device according to claim 1, wherein the rubber mass portion protrudes from the rubber body portion toward the one side in the axial direction.

3. The anti-vibration device according to claim 1 or 2, wherein the rubber mass portion protrudes from the rubber body portion toward the other side relative to the one side in the axial direction.

4. A method for manufacturing an anti-vibration device to obtain the anti-vibration device according to claim 1, the method comprising:
preparing a pre-anti-vibration device with a same configuration as the anti-vibration device except for the body rubber not including the rubber mass portion; and
forming the rubber mass portion of the body rubber by removing a rubber portion near both ends on the one side and/or the other side relative to the one side in the axial direction at both contact portions of the body rubber in contact with the outer attachment member and the inner attachment member.
